# EUROPEAN PATENT SPECIFICATION

(11) **EP 0 556 724 B1**
(45) Date of publication and mention of the grant of the patent: **18.06.1997**
(21) Application number: 93102160.4
(22) Date of filing: 11.02.1993
(51) Int. Cl.: B60J 3/00, B29C 65/02, B29C 65/74

(54) **Method for the manufacture of a vehicle sun visor, and a visor made by the method**
Verfahren zur Herstellung einer Fahrzeug-Sonnenblende und nach diesem Verfahren hergestellte Sonnenblende
Méthode pour fabriquer un pare-soleil d'un véhicule et pare-soleil fabriqué selon cette méthode

(30) Priority: 14.02.1992 IT TO920118
(43) Date of publication of application: 25.08.1993
(73) Proprietor: SATURNO S.p.A MATERIE PLASTICHE, 10136 Torino (IT)
(72) Inventor: Russo, Salvatore, I-10136 Torino (IT)
(74) Representative: Prato, Roberto

(56) References cited:
- EP-A- 0 291 854
- DE-B- 1 149 260

## Description

The present invention relates to a method for the manufacture of a vehicle sun visor, particularly for a motor vehicle, and to a visor obtained by the method.

Methods are known for the manufacture of vehicle sun visors in which a flat rectangular framework is inserted in a mould cavity into which a synthetic foam is injected and which, on solidifying, forms the main body of the visor. The sun visor may also be improved by means of an outer covering constituted by two films of plastics material sealed together along their peripheral edges.

Prior art document EP-A-0 291 854 discloses a method for manufacturing an automobile sun visor with the steps of the preamble of claim 1. By this method, the sun visors can be made more quickly and economically than by the previous known methods using injection moulding. However, the filling of the sun visor achieved by this method is not perfect at the periphery of the sun visor. Thus, it does not enable to achieve the typical external finish of the more expensive sun visors such as those made by injection moulding of synthetic foam.

The object of the present invention is to provide a method which still enables a sun visor to be made more quickly and economically than by the methods including injection moulding, but which achieves the same typical external finish.

This object is achieved by the method of claim 1.

Further objects and advantages obtained by the method of the present invention will become apparent from the description which follows.

For a better understanding of the invention, a description of one, non-limitative embodiment thereof will now be given with reference to the appended drawings, in which:
Figure 1 is a partially-sectioned perspective view of a sun visor made by the method of the present invention; and
Figures 2, 3, 4 and 5 show, schematically and in section, successive steps in the method for the manufacture of the visor illustrated in Figure 1.

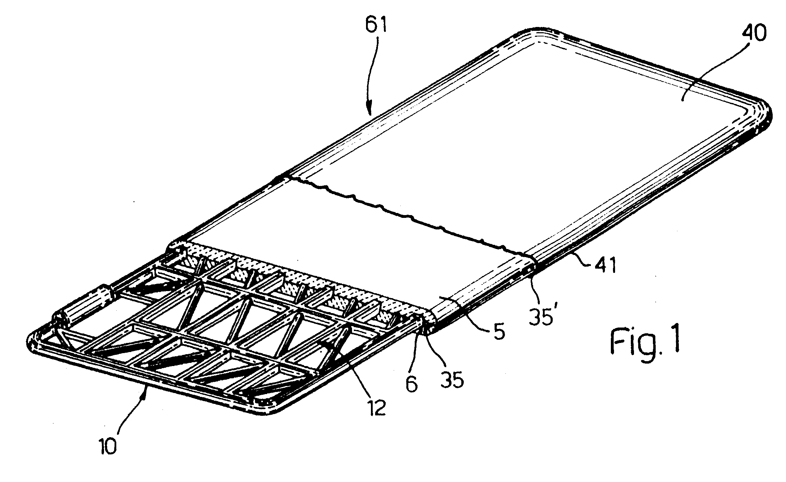

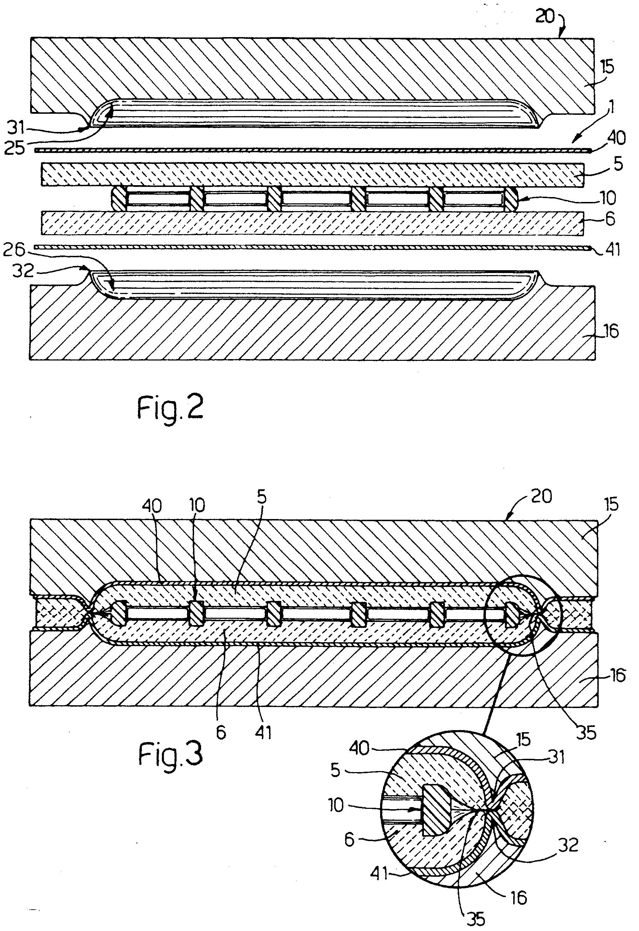

In Figure 2, a layered structure is generally indicated 1 and includes two sheets 5 and 6 of expanded plastics material, conveniently expanded polythene, which can therefore be squashed, disposed on the opposite faces of a flat, rectangular framework 10 of known type which has a regular polygonal mesh structure 12 (Figure 1) and is conveniently made from plastics material; two covering films 40 and 41 of plastics material, conveniently PVC, are disposed on the outer surfaces of the sheets 5 and 6.

The layered structure 1 (Figure 2) is located between first and second dies 15 and 16 of a press 20 shown schematically. More particularly, the dies 15 and 16 have respective cavities 25 and 26 of substantially rectangular transverse-section and have transverse and longitudinal dimensions slightly greater than those of the framework 20. The cavities 25 and 26 are bounded by peripheral walls 31 and 32 which have edges with triangular cross-sections for cutting the sheets 5 and 6 and the films 40 and 41 in the manner which will be clarified below.

The sheets 5 and 6 and the covering films 40 and 41 in fact have widths and lengths not only greater than the width and the length of the rectangular framework 10 but also than the width and the length of the cavities of the dies 25 and 26.

After the preparatory step of figure 2, the dies 15 and 16 are closed (Figure 3) to compress the layered structure 1 within the cavities 25 and 26. Moreover, heat is supplied to the layered structured 1 from the press 20, conveniently by means of a high-frequency welding device (of known type). In a first cycle (Figure 3) of this step in which the dies 15 and 16 are closed, a relatively lower quantity of heat is transmitted, conveniently by not supplying the high frequency welding device at full power, so that the sheets 5 and 6 reach a temperature of about 120°C. The sheets 5 and 6 (because of their state of plasticity) partly penetrate the spaces between the meshes 12 of the framework 10 while their peripheral edge portions are bent so as to come into contact with each other and become sealed along a peripheral portion 35 parallel to the periphery of the frame 10.

The sheets 5 and 6 become progressively squashed by the peripheral edges 31 and 32 of the moulding cavities 25 and 26, the portions inside and outside the moulding cavities 25 and 26 becoming separated and the films 40 and 41 being brought into substantial contact as illustrated in the enlarged portion of Figure 3.

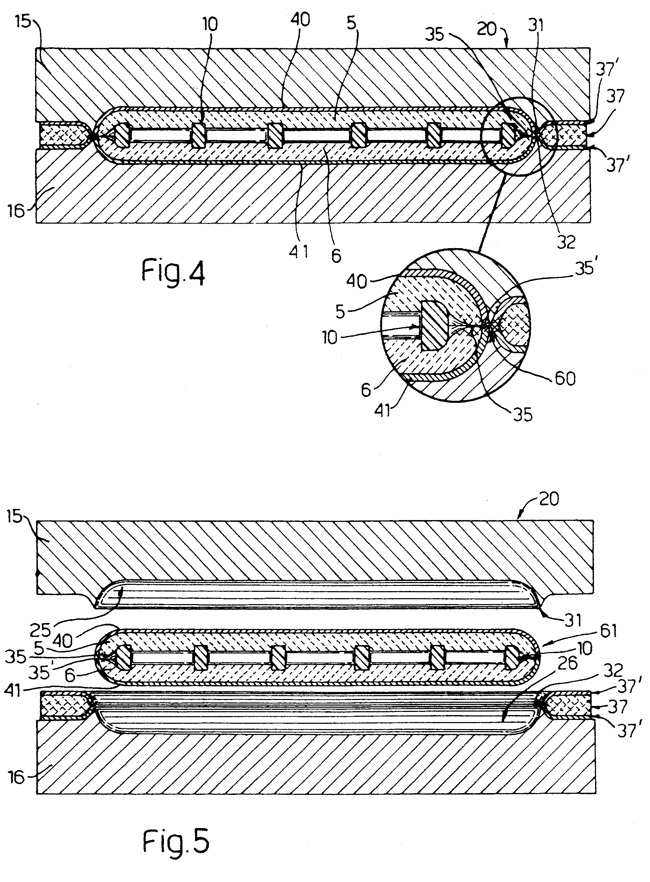

Subsequently, in a second cycle (Figure 4) of the step in which the dies 15 and 16 are closed, the quantity of heat supplied is increased, conveniently by varying the supply to the high frequency welding device, so that the films 40 and 41 reach a temperature of about 150°C at which they tend to melt. With the completion of the progressive closure of the dies 15 and 16, there is a progressive union until the facing peripheral portions 35' of the films 40 and 41 become sealed around the peripheral portion 35 of the sheets 5 and 6 which are already sealed, the final peripheral cutting 60 to define the form of a sun visor 61 (Figure 1) being effected by the mating peripheral edges 31 and 32 of the dies 15 and 16.

Thus, with the subsequent switching off of the supply to the high frequency welding device, the sheets 5 and 6 and the films 40 and 41, after their constituent plastics materials have cooled, are firmly connected together by their peripheral portions 35 and 35'. Moreover, during this final step of closing the dies 15 and 16, the edges 31 and 32 cut peripheral waste portions 37 and 37' of the sheets 5 and 6 and of the films 40 and 41 which are outside the peripheral portion 35' and not within the cavities 25 and 26.

Finally (Figure 5), the dies 15 and 16 are opened and the layered structure 1 forming the main part of a sun visor 61 is removed from the press 20. The layered structure 1 is thus a unitary piece which may be gripped and handled easily.

The sun visor 61 may thus be finished subsequently by the addition of completing parts of known type (not illustrated), such as: elements for fixing it and orienting it relative to the vehicle roof lining, mirror, light, etc.

From the above it will be clear that the method described enables a sun visor to be manufactured very quickly and economically, the production steps being reduced to a minimum.

More particularly, the use of a squashable synthetic material, such as expanded polythene, for the sheets 5 and 6 enables these to be hot-formed, with mutual adhesion of their edges, encapsulation of the internal framework and curvature of the edges themselves; moreover the lower melting point of the material of the sheets 5 and 6 than that of the films 40 and 41 enables the steps in which the respective peripheral edges are sealed together to be differentiated while this is carried out in a single mould, thereby achieving perfect, voidless filling, between the peripheral portions 35 and 35', with an external finish typical of the more expensive sun visors such as those made by injection moulding of synthetic foam.

It is thus possible to use two types of plastics material for the filling and the outer sheathing of a sun visor which are incompatible with each other while achieving sealing in that the sealing of the different materials is not achieved simultaneously but by a differentiated process and, moreover, the padding material is progressively squashed and divided along the peripheral zone of the visor so as to enable the sheathing films to come into contact for the subsequent fusion of their edges.

The expanded polythene can also be recycled when the visor is replaced or recovered before demolition of the vehicle and is economically preferable to foamed material since its working does not involve the emission of noxious substances (for example vapours).

Finally it is clear that modifications and variations may be made to the present invention.

Inter alia, the layered structure 1 may have a different shape from that described previously and may include other layers of padding and/or outer sheaths, and/or other supplementary film elements and the framework 10 may have a different structure from that shown, for example it may include a single rectangular sheet or may be formed from aluminium or steel wire or of a different material (card, etc).

A layer of adhesive may also be placed between the sheets 5 and 6 and the framework 10.

The framework 10 may also have curved parts.

## Claims

1. A method for the manufacture of a vehicle sun visor (61), including:
a first step in which at least a first sheet (5) and a second sheet (6) of expanded synthetic material are disposed on the opposite faces of a mainly flat framework (10), and in which each of the sheets (5, 6) is covered with an outer coating film (40, 41) to form a layered structure (1); the sheets (5, 6) and the films (40, 41) having at least some dimensions substantially greater than the corresponding ones of the framework (10) and than those of the mould cavity (25, 26) of a lower die (16) and an upper die (15) of a press (20);
a second step in which the layered structure (1) is closed between the dies (15, 16); a cycle being carried out in the second step in which the edges of the outer covering films (40, 41) are sealed together along a peripheral zone (35') at the peripheral edge of the said expanded sheets (5, 6);
and a third step in which the dies (15, 16) are opened and the layered structure (1) constituting a main part of a sun visor (61) is removed from the press (20),
characterised in that said cycle of the second step is a second cycle, preceded by a first cycle carried out in the second step after the layered structure (1) has been closed between the dies (15, 16), the edges of the sheets (5, 6) are at least partially sealed together along a peripheral zone (35) of the framework (10) during said first cycle.

2. A method according to Claim 1, characterised in that, in the second step, the dies (15, 16) are closed progressively to effect the said first and second cycles.

3. A method according to Claim 2, characterised in that, at the end of the cycle of the second step, the synthetic material of the sheets (5, 6) is progressively squashed by the edges (31, 32) of the cavities (25, 26) of the dies (15, 16) until there is substantial contact between the outer covering films (40, 41).

4. A method according to any one of the preceding claims, characterised in that, at the end of the second cycle of the second phase, the outer covering films (40, 41) are squashed progressively by the edges (31, 32) of the cavities (25, 26) of the dies (15, 16) until the films (40, 41) have been cut peripherally to the shape of the sun visor (61).

5. A method according to any one of the preceding claims, characterised in that the dies (15, 16) include heating means for heating the layered structure (1); the heating means producing different temperatures in the sheets (5, 6) and in the covering films (40, 41) of the layered structure (1) in the said first and second cycles of the second step.

6. A method according to Claim 5, characterised in that, during the first cycle, the layered structure (1) reaches a lower temperature than that reached in the second cycle.

7. A method according to Claim 5 or Claim 6, characterised in that, during the first cycle, the temperature reached by the sheets (5, 6) is about 120°C.

8. A method according to any one of Claims 5 to 7, characterised in that, during the second cycle, the temperature reached by the outer covering films (40, 41) is about 150°C.

9. A method according to any one of Claims 5 to 8, characterised in that the heating means include high-frequency welding means.

10. A method according to Claim 9, characterised in that the heating power produced by the high-frequency welding means in the sheets (5, 6) and in the films (40, 41) of the layered structure (1) is lower and higher respectively in the first and second cycles of the second step.

11. A sun visor, characterised in that it is made by the method of any one of Claims 1 to 10.

12. A visor according to Claim 11, characterised in that the sheets (5, 6) are of expanded polythene.

13. A visor according to Claim 11 or Claim 12, characterised in that the outer covering films (40, 41) are of PVC.

## Patentansprüche

1. Verfahren zur Herstellung einer Fahrzeugsonnenblende (61) mit:
einem ersten Schritt, bei dem zumindest eine erste Schicht (5) und eine zweite Schicht (6) expandierten synthetischen Materials auf den gegenüberliegenden Flächen eines im wesentlichen flachen Gerüstes (10) angeordnet sind, und jede der Schichten (5, 6) mit einer Deckfolie (40, 41) unter Ausbildung einer Schichtstruktur 1 bedeckt ist; die Schichten (5, 6) und die Folien (40, 41) Dimensionen besitzen, die größer sind, als die des dazugehörigen Gerüstes (10) und der Formvertiefungen (25, 26) des unteren Gesenks (16) und oberen Gesenks (15) einer Presse (20);
einem zweiten Schritt, bei dem die Schichtstruktur (1) zwischen den Gesenken (15, 16) eingeschlossen wird; wobei ein Zyklus im zweiten Schritt ausgeführt wird bei dem die Kanten der äußeren Deckfolien (40, 41) entlang ihren äußeren Abschnitten (35') an den Außenkanten der expandierten Schichten (5, 6) miteinander verschweißt werden.
und einem dritten Schritt, bei dem die Gesenke (15, 16) geöffnet und die Schichtstruktur (1), die den Hauptteil der Sonnenblende (61) darstellt, aus der Presse (20) entfernt wird,
dadurch gekennzeichnet, daß der Zyklus des zweiten Schritts ein zweiter Zyklus ist, dem ein erster Zyklus vorausgeht, der im zweiten Schritt, nachdem die Schichtstruktur (1) zwischen den Gesenken (15, 16) eingeschlossen wurde, durchgeführt wird, in dem die Kanten der Schichten (5, 6) zumindest teilweise miteinander entlang eines äußeren Bereiches (35) des Gerüstes (10) während des ersten Zyklus verschweißt werden.

2. Verfahren nach Anspruch 1, dadurch gekennzeichnet, daß beim zweiten Schritt die Gesenke (15, 16) stufenweise geschlossen werden, um die ersten und zweiten Zyklen durchzuführen.

3. Verfahren nach Anspruch 2, dadurch gekennzeichnet, daß am Ende des Zyklus des zweiten Schrittes das synthetische Material der Schichten (5, 6) schrittweise mittels der Kanten (31, 32) der Vertiefungen (25, 26) der Gesenke (15, 16) zusammengedrückt wird, bis sich die äußeren Folien (40, 41) gegenseitig weitgehend berühren.

4. Verfahren nach einem der vorangehenden Ansprüche, dadurch gekennzeichnet, daß am Ende des zweiten Zyklus der zweiten Phase die äußeren Deckfolien (40, 41) schrittweise durch die Kanten (31, 32) der Vertiefungen (25, 26) der Gesenke (15, 16) zusammengedrückt werden, bis die Folien (40, 41) am Rand in der Form der Sonnenblende (61) abgeschnitten werden.

5. Verfahren nach einem der vorangehenden Ansprüche, dadurch gekennzeichnet, daß die Gesenke (15, 16) Heizmittel zum Erwärmen der Schichtstruktur (1) beinhalten; die Wärmemittel verschiedene Temperaturen in den Schichten (5, 6) und in den Deckfolien (40, 41) der Schichtstrukutur (1) im ersten und zweiten Zyklus des zweiten Schrittes erzeugen.

6. Verfahren nach Anspruch 5, dadurch gekennzeichnet, daß während des ersten Zyklus die Schichtstruktur (1) eine geringere Temperatur als im zweiten Zyklus erreicht.

7. Verfahren nach Anspruch 5 oder 6, dadurch gekennzeichnet, daß die während des ersten Zyklus von den Schichten (5, 6) erreichte Temperatur ca. 120°C beträgt.

8. Verfahren nach einem der Ansprüche 5 bis 7, dadurch gekennzeichnet, daß während des zweiten Zyklus die von den äußeren Deckfolien (40, 41) erreichte Temperatur ca. 150°C beträgt.

9. Verfahren nach einem der Ansprüche 5 bis 8, dadurch gekennzeichnet, daß die Heizmittel Hochfrequenz-Schweißmittel beinhalten.

10. Verfahren nach Anspruch 9, dadurch gekennzeichnet, daß die Wärmeleistung, die durch die Hochfrequenz-Schweißmittel in den Schichten (5, 6) und den Folien (40, 41) der Schichtstruktur (1) erzeugt wird geringer und höher ist abhängig davon, ob der erste oder zweite Zyklus des zweiten Schrittes durchgeführt wird.

11. Sonnenblende, dadurch gekennzeichnet, daß sie durch das Verfahren einer der Ansprüche 1 bis 10 hergestellt ist.

12. Blende, nach Anspruch 11, dadurch gekennzeichnet, daß die Schichten (5, 6) aus expandiertem Polyethylen bestehen.

13. Blende, nach Anspruch 11 oder 12, dadurch gekennzeichnet, daß die Deckfolien (40, 41) aus PVC bestehen.

## Revendications

1. Méthode pour fabriquer un pare-soleil de véhicule comprenant :
une première étape dans laquelle au moins une première feuille (5) et une deuxième feuille (6) de matériau synthétique expansé sont disposées sur les faces opposées d'un cadre principalement plan (10), et dans laquelle chacune des feuilles (5,6) est recouverte d'un film de revêtement extérieur (40,41) pour former une structure en couche (1) : les feuilles (5,6) et les films (40,41) ayant au moins certaines de leurs dimensions sensiblement plus grandes que les dimensions correspondantes du cadre (10) et que celles de la cavité de moulage (25,26) de la matrice inférieure (16) et la matrice supérieure (15) d'une presse (20);
une deuxième étape dans laquelle la structure en couche (1) est enfermée entre les matrices (15,16); un cycle étant effectué pendant la deuxième étape dans laquelle les bords des films de revêtement extérieur (40,41) sont scellés sur le bord périphérique des feuilles expansées (5,6) le long d'une zone périphérique (35');
et une troisième étape dans laquelle les matrices (15,16) sont ouvertes et la structure en couche (1) constituant la partie principale du par-soleil (61) est retirée de la presse (20),
caractérisée en ce que le cycle de la deuxième étape est un deuxième cycle précédé d'un premier cycle effectué pendant la deuxième étape après que la structure en couche (1) a été enfermée entre les matrices (15,16), les bords des feuilles (5,6) étant au moins partiellement scellés ensemble le long de la zone périphérique (35) du cadre (10) durant le premier cycle.

2. Méthode selon la revendication 1, caractérisée en ce que, dans la deuxième étape, les matrices (15,16) sont fermées progressivement pour effectuer les premier et deuxième cycles.

3. Méthode selon la revendication 2, caractérisée en ce que, à la fin du cycle de la deuxième étape, le matériau synthétique des feuilles (5,6) est progressivement écrasé par les bords (31,32) des cavités (25,26) des matrices (15,16) jusqu'à ce qu'il y ait essentiellement un contact entre les films de revêtement extérieur (40,41).

4. Méthode selon l'une des revendications précédentes, caractérisée en ce que, à la fin du deuxième cycle de la deuxième phase, les films de revêtement extérieur (40,41) sont progressivement écrasés par les bords (31,32) des cavités (25,26) des matrices (15,16) jusqu'à ce que les films (40,41) soient coupés à leur périphérie à la forme du pare-soleil (61).

5. Méthode selon l'une des revendications précédentes, caractérisée en ce que les matrices (15,16) comprennent des moyens de chauffage pour chauffer la structure en couche (1), les moyens de chauffage produisant des températures différentes dans les feuilles (5,6) et les films de revêtement (40,41) de la structure en couche (1) pendant les premier et deuxième cycles de la deuxième étape.

6. Méthode selon la revendication 5, caractérisée en ce que, durant le premier cycle, la structure en couche (1) atteint une température plus basse que celle atteinte pendant le deuxième cycle.

7. Méthode selon la revendication 5 ou 6, caractérisée en ce que, durant le premier cycle, la température atteinte par les feuilles (5,6) est d'environ 120°C.

8. Méthode selon l'une des revendications 5 à 7, caractérisée en ce que, durant le deuxième cycle, la température atteinte par les films de revêtement extérieur (40,41) est d'environ 150°C.

9. Méthode selon l'une des revendications 5 à 8, caractérisée en ce que les moyens de chauffage comprennent des moyens de soudage haute fréquence.

10. Méthode selon la revendication 9, caractérisée en ce que la puissance de chauffage produite par les moyens de soudage haute fréquence dans les feuilles (5,6) et dans les films (40,41) de la structure en couche (1) est plus basse et plus haute respectivement pendant les premier et deuxième cycles de la deuxième étape.

11. Pare-soleil, caractérisé en ce qu'il est réalisé par la méthode selon l'une des revendications 1 à 10.

12. Pare-soleil selon la revendication 11, caractérisé en ce que les feuilles (5,6) sont en polyéthylène expansé.

13. Pare-soleil selon la revendication 11 ou 12, caractérisé en ce que les films de revêtement extérieur (40,41) sont en PVC.
